# EUROPÄISCHE PATENTSCHRIFT

(11) **EP 1 165 200 B1**
(45) Veröffentlichungstag und Bekanntmachung des Hinweises auf die Patenterteilung: **19.03.2003**
(21) Anmeldenummer: 00918806.1
(22) Anmeldetag: 17.03.2000
(51) Int. Cl.: B01D 11/02, B01J 8/20

(54) **VERFAHREN UND VORRICHTUNG ZUR STOFFTRENNUNG**
METHOD AND DEVICE FOR SEPARATING SUBSTANCES
PROCEDE ET DISPOSITIF PERMETTANT DE SEPARER DES MATERIAUX

(30) Priorität: 19.03.1999 DE 19912269
(43) Veröffentlichungstag der Anmeldung: 02.01.2002
(73) Patentinhaber: Ticona GmbH, 65451 Kelsterbach (DE)
(72) Erfinder: HAUBS, Michael, D-55545 Bad Kreuznach (DE); WAGENER, Reinhard, D-65719 Hofheim (DE)
(86) Internationale Anmeldenummer: EP0002366
(87) Internationale Veröffentlichungsnummer: WO00056417

(56) Entgegenhaltungen:
- DE-A- 2 511 497
- GB-A- 1 153 504
- US-A- 4 290 998
- US-A- 4 590 038
- DATABASE WPI Week 197813 Derwent Publications Ltd., London, GB; AN 1978-24195 XP002142096 & JP 53 016369 A ((MITB)MITSUI ENG & SHIPBUILDING CO), 15. Februar 1978 (1978-02-15)

## Beschreibung

Die Erfindung betrifft ein Verfahren zur Stofftrennung gemäß dem Oberbegriff des Anspruchs 1 sowie eine insbesondere zur Durchführung des Verfahrens vorgesehene Vorrichtung gemäß dem Oberbegriff des Anspruchs 10.

Bei einem gattungsgemäßen Verfahren wird ein Stoff, welcher zumindest eine erste, schwere Stoffkomponente und eine zweite, leichte Stoffkomponente umfaßt, in eine Sedimentationskammer eines Behälters eingeleitet und einem Gravitationsfeld ausgesetzt. Unter Einfluß des Gravitationsfeldes wird in der Sedimentationskammer die erste, schwere Stoffkomponente in einer in Gravitationsrichtung unteren Sedimentationszone angereichert, welche nach unten durch einen Boden begrenzt ist. Der Stoff mit der angereicherten ersten Stoffkomponente wird aus der Sedimentationszone über eine Öffnung in dem Boden nach unten abgeleitet. In den Behälter wird zur Verbesserung der Trennung zwischen der ersten Stoffkomponente und der zweiten Stoffkomponente ein Waschfluid eingeleitet.

Eine gattungsgemäße Vorrichtung zur Stofftrennung weist einen Behälter auf, der zum Aufnehmen und Sedimentieren eines Stoffes mindestens eine Sedimentationskammer umfaßt, die an ihrem unteren Ende durch einen Boden begrenzt ist. Dieser weist eine Öffnung zum Ableiten eines sedimentierten Stoffes auf, wobei an dem Behälter eine Strömungseinrichtung zum Zuführen eines Waschfluides vorgesehen ist.

Ein gattungsgemäßes Verfahren und eine gattungsgemäße Vorrichtung gehen beispielsweise aus der DE 25 11 497 C3 hervor. Einer Austauschsäule wird ein schwerer Mengenstrom von oben und ein leichter Mengenstrom von unten zugeführt. In der Austauschsäule sind Böden und Durchlässe so angeordnet, daß der schwere Mengenstrom von oben in die einzelnen Kammern einströmt und in eine Rotationsbewegung versetzt wird. Der schwere Mengenstrom dient dabei als ein Treibstrahl, der über spezielle Durchlässe in den Böden aus einer weiter unter liegenden Kammer Waschfluid so ansaugt, daß eine intensive Vermischung zwischen dem schweren Mengenstrom und dem Waschfluid erfolgt. Hierdurch soll erreicht werden, zumindest eine bestimmte Stoffkomponente des schweren Mengenstromes abzutrennen, wobei sich eine schwere Phase in einem unterem Bereich der Austauschsäule absetzt und von dort abgezogen werden kann.

Voraussetzung zur Durchführung dieses bekannten Verfahrens ist, daß sich innerhalb der Austauschsäule ein gewünschtes stabiles Strömungsverhalten einstellt. In der Praxis ist jedoch die Einstellung eines derartigen stabilen Strömungsverhaltens sehr problematisch und kaum erreichbar, da die einzelnen Ausgangsstoffe in ihrer quantitativen und qualitativen Zusammensetzung häufig größeren Schwankungen ausgesetzt sind. Zudem steht die bei dem gattungsgemäßen Stand der Technik angestrebte intensive Vermischung einer effizienten Trennung zwischen einer schweren Phase und einer leichten Phase durch Sedimentation entgegen.

Ein weiteres gattungsgemäßes Verfahren und eine gattungsgemäße Vorrichtung gehen aus der DE 28 19 459 A1 hervor. Bei diesem bekannten Gegenstrom-Dekantierverfahren wird ein zu trennendes Stoffgemisch in eine säulenförmige Vorrichtung mit mehreren Zellen eingeleitet, während im Gegenstrom hierzu eine Waschfiüssigkeit eingeführt wird. Die einzelnen Zellen weisen jeweils einen Boden mit einer Öffnung auf, welche durch ein Ventil geöffnet und verschlossen werden kann. Aus dem Stoffgemisch setzt sich eine bestimmte Feststoffmenge auf dem Boden als Sediment ab, wobei das Ventil bei Erreichen einer bestimmten Sedimentmenge geöffnet und so das Sediment zur nächsten Zelle weitergeleitet wird. Es handelt sich hierbei um ein diskontinuierliches Verfahren, wobei das Prinzip des Aufkonzentrierens bzw. des Abtrennens der Flüssigkeit von dem Feststoff ebenfalls auf Vermischung und Verdünnung beruht.

Weiter ist aus der WO 96/29134 A1 ein Verfahren zum Trennen von nicht löslichen Teilchen von einer Flüssigkeit bekannt, wobei einer Suspension gezielt Luftblasen beigemengt werden. Diese Luftblasen hängen sich an die nicht löslichen Teilchen an, so dass sich in einem Behälter eine aufschwimmende Flotationsschicht bildet, welche einfach abgetragen werden kann.

Aus der DE 31 21 117 A1 geht eine Trennvorrichtung mit darin unregelmäßig angeordneten Trennkörpern zum Trennen von Medien unterschiedlicher Dichte hervor. Das zu trennende Medium wird an einer Unterseite eines Absetzbehälters über eine Zuführung eingeleitet, wobei der Trennvorgang ohne ein Waschfluid erfolgt.

In der DE 19 31 777 A1 wird ein Verfahren und eine Vorrichtung zur Klärung von trübstoffhaltigen Flüssigkeiten beschrieben. Zur Verkleinerung der Grundfläche des Klärbehälters ist dieser in Stufen unterteilt. Der sedimentierte Feststoff wird dabei aus jeder Absetzeinheit separat abgeführt. Eine Verwendung von Waschflüssigkeit ist nicht vorgesehen.

Der Erfindung liegt die Aufgabe zugrunde, ein Verfahren und eine Vorrichtung zu schaffen, mit denen eine einfache und zugleich besonders effiziente Trennung von zwei unterschiedlichen Stoffkomponenten ermöglicht wird.

Nach der Erfindung wird die Aufgabe zum einen durch ein Verfahren mit den Merkmalen des Anspruchs 1 und zum anderen durch eine Vorrichtung mit den Merkmalen des Anspruchs 10 gelöst.

Das erfindungsgemäße Verfahren ist dadurch gekennzeichnet, daß der Stoff mit der angereicherten ersten Stoffkomponente durch die Öffnung in dem Boden kontinuierlich als ein Sedimentfilm abgeleitet wird, welcher durch das Waschfluid quer angeströmt wird, und daß das Waschfluid den Sedimentfilm durchströmt und dabei eine zumindest teilweise Verdrängung der verbliebenen zweiten Stoffkomponente aus dem Sedimentfilm erfolgt.

Ein Grundgedanke der Erfindung liegt darin, zur Stofftrennung zwischen den zwei Stoffkomponenten vor allem einen Verdrängungseffekt auszunutzen, bei dem keine oder kaum eine intensive Vermischung auftritt. Der mit der schwereren Stoffkomponente angereicherte, relativ dünne Sedimentfilm wird von dem Waschfluid, welches ein Gas oder eine Flüssigkeit sein kann, quer angeströmt und dabei durchströmt. Insbesondere aufgrund der unterschiedlichen Massenträgheiten der verschiedenen Stoffkomponenten wird verstärkt die leichtere Stoffkomponente durch das Waschfluid aus dem Sedimentfilm verdrängt. Gegenüber dem gattungsgemäßen Verfahren des Vermischens des Stoffes mit einem Waschfluid und anschließendem Sedimentieren wird bei dem erfindungsgemäßen Verfahren eine deutlich verbesserte Stofftrennung erreicht. Dabei sind relativ große Mischkammern nicht notwendig, so daß das erfindungsgemäße Verfahren in kompakten Vorrichtungen durchgeführt werden kann.

Von wesentlicher Bedeutung ist die Ausbildung eines kontinuierlichen, quasi-stationären Sedimentfilms. Dieser ist als eine durchströmbare Wand oder vorhangartige Barriere zu verstehen, deren geometrische Ausbildung sich maßgeblich nach den Stoffkomponenten, dem Waschfluid sowie deren Strömungseigenschaften bestimmt. Einerseits sollte der Sedimentfilm so lang und dünn sein, dass eine zuverlässige und ausreichende Durchströmung des Waschfluides gewährleistet ist. Dies stellt eine gute Verdrängungswirkung sicher. Andererseits soll der Sedimentfilm so dick und kurz sein, daß dieser bei der Durchströmung stabil bleibt und nicht partiell aufreißt.

Gemäß einer bevorzugten Weiterbildung der Erfindung ist vorgesehen, daß der Stoff mit der angereicherten ersten Stoffkomponente nach dem Durchströmen des Waschfluides in zumindest eine weitere Sedimentationskammer eingeleitet wird, in welcher der Vorgang des Anreicherns der ersten Stoffkomponente, das Bilden eines Sedimentfilmes sowie das Anströmen des Sedimentfilmes mittels des Waschfluides wiederholt werden. Durch eine nachfolgende Wiederholung des Sedimentationsvorganges können auch die Anteile der ersten Stoffkomponente zurückgewonnen werden, welche durch das Waschfluid aus dem Sedimentfilm mit verdrängt wurden. Des weiteren kann in der nachfolgenden Sedimentationsstufe auch eine Trennung des Waschfluides erfolgen, welches sich mit dem zu behandelnden Stoff in dem Sedimentfilm vermischt hat.

Für eine besonders gute Stofftrennung ist es nach der Erfindung vorgesehen, daß der Vorgang des Anreicherns der ersten Stoffkomponente sowie des Anströmens des Sedimentfilmes in einer Vielzahl von Schritten wiederholt wird, bis ein vorgegebener Restanteil der zweiten Stoffkomponente erreicht ist. Bei einer Wiederholung des erfindungsgemäßen Verfahrens in bis zu zehn und mehr Stufen kann ein Restanteil der zweiten Stoffkomponente in der ersten Stoffkomponente auf nahezu jeden beliebigen Wert abgesenkt werden. Das erfindungsgemäße Verfahren eignet sich insbesondere für Suspensionen, bei denen eine Stoffkomponente der Feststoff und die andere Stoffkomponente eine Flüssigkeit ist. In der Regel ist dabei der Feststoff die schwerere Stoffkomponente, welche zur Sedimentbildung in Gravitationsrichtung nach unten sinkt. In bestimmten Fällen, etwa bei einem Verfahren zur Meerwasserentsalzung unter Bildung von Eiskristallen, kann der das Sediment bildende Feststoff auch die leichtere Stoffkomponente sein. Die Sedimentbildung erfolgt dabei entgegen der Gravitationsrichtung. Neben unterschiedlichen Aggregatzuständen der beiden Stoffkomponenten können diese jedoch auch denselben Aggregatzustand aufweisen, so daß eine Trennung zwischen zwei Fluiden möglich ist. Im nachfolgenden soll der Begriff "oben" als in Sedimentationsrichtung vorangehend und der Begriff "unten" als in Sedimentationsrichtung nachfolgend verstanden werden.

Für eine vorteilhafte Durchführung des Verfahrens ist es zweckmäßig, daß als Waschfluid ein Fluid mit einem spezifischen Gewicht verwendet wird, welches sich von dem der ersten Stoffkomponente unterscheidet. Erfolgt die Sedimentbildung in Gravitationsrichtung so ist die Dichte des Waschfluids geringer als die der ersten Stoffkomponente. Erfolgt die Sedimentbildung entgegen der Gravitationsrichtung, so ist die Dichte des Waschfluids zweckmäßig größer. Das Waschfluid kann dabei insbesondere auch ein Lösungsmittel sein, durch welches unerwünschte Bestandteile aus dem zu behandelnden Stoff gelöst und damit als zweite oder zusätzlich zur zweiten Stoffkomponente abgetrennt werden. Das Waschfluid kann mit der zweiten Stoffkomponente gleich oder verschieden sein, mischbar oder unmischbar sein.

Eine besonders wirtschaftliche Ausnutzung des Waschfluides wird dadurch erreicht, daß bei kaskadenartig übereinander angeordneten Sedimentationskammern der zu trennende Stoff an einer oberen Sedimentationskammer und das Waschfluid an einer unteren Sedimentationskammer in den Behälter eingeleitet werden und daß das Waschfluid nach einem Durchströmen des Sedimentfilmes an der unteren Sedimentationskammer anschließend entgegen der Sedimentationsrichtung zum Sedimentfilm der darüberliegenden Sedimentationskammer strömt. Es wird so eine Gegenstromwaschung entgegen der Sedimentationsrichtung erreicht.

Erfindungsgemäß ist es für einen gleichmäßigen Verfahrensablauf von Vorteil, daß der Stoff mit der angereicherten ersten Stoffkomponente an einem Ende des Behälters abgeleitet wird und daß das Waschfluid mit der zweiten Stoffkomponente an einem gegenüberliegenden Ende des Behälters abgeleitet wird.

Um ein zuverlässiges Durchströmen des Waschfluides quer durch den im wesentlichen parallel zur Gravitationsrichtung strömenden Sedimentfilm zu erreichen, ist es nach einem weiteren Aspekt der Erfindung vorgesehen, daß der mit der ersten Stoffkomponente angereicherte Stoff durch eine ringförmige Öffnung in dem Boden der Sedimentationskammer strömt und dabei ein ringförmig geschlossener Sedimentfilm gebildet wird und daß das Waschfluid den ringförmig geschlossenen Sedimentfilm von außen nach innen oder von innen nach außen durchströmt. Ein entsprechender Strömungskanal für das Waschfluid ist dabei einerseits radial außerhalb des ringförmigen Sedimentfilmes angeordnet, während andererseits ein weiterer Strömungskanal für das Waschfluid radial innerhalb des Sedimentfilmes verläuft. So kann das Waschfluid zum einen radial nach innen durch den Waschfilm strömen und über den radial innen liegenden Leitungskanal nach oben zu der nächsten Sedimentationskammer geleitet werden. Zum anderen kann dann bei der darüberliegenden, oberen Kammer das Waschfluid von innen radial nach außen durch den ringförmigen Sedimentfilm strömen, um einen erneuten Verdrängungsvorgang zu bewirken.

Nach der Erfindung wird unerwünschten Ablagerungen innerhalb des Behälters sowie einem Zusetzen der Öffnungen in den Böden der Sedimentationskammern dadurch entgegengewirkt, daß mittels eines Bewegungsorgans in den Behälter gezielt Bewegungsenergie, insbesondere in den Bereich der Sedimentationszone eingebracht wird. Dies kann beispielsweise mittels eines Rührers innerhalb des Behälters oder Schwingungserzeugern innerhalb und/oder außerhalb des Behälters erfolgen. Bei der Behandlung von Suspensionen, bei welchen sich Sedimentations-kuchen innerhalb der Sedimentationskammern oberhalb der Öffnungen in den Böden bilden, werden durch ein gezieltes Einbringen von Bewegungsenergie Scherkräfte in dem Sedimentationskuchen bewirkt. Durch diese Scherkräfte werden eventuell auftretende, unerwünschte Strömungskanäle des Waschfluides durch den Sedimentationskuchen beständig zugesetzt. Die Bewegungsenergie wird dabei so eingestellt, daß hierdurch der Sedimentationsprozeß nicht wesentlich durch zusätzliche Vermischungseffekte beeinträchtigt wird.

Hinsichtlich der Vorrichtung ist die Erfindung dadurch gekennzeichnet, daß die Öffnung im Boden der Sedimentationskammer als ein Spalt ausgebildet ist, durch welchen beim Ableiten des sedimentierten Stoffes ein kontinuierlicher Sedimentfilm erzeugbar ist, und daß die Strömungseinrichtung zumindest einen Kanal umfaßt, der in einem Bereich des Austrittes des Sedimentfilmes aus dem Spalt angeordnet und zum Anströmen des Waschfluides quer zu dem Sedimentfilm ausgebildet ist. Mit der erfindungsgemäßen Vorrichtung kann insbesondere das zuvor beschriebene Verfahren durchgeführt werden. Das An- und Durchströmen erfolgt in einem spitzen Winkel oder vorzugsweise in einem nahezu rechten Winkel zum Sedimentfilm.

Eine bevorzugte Ausführungsform der erfindungsgemäßen Vorrichtung besteht darin, daß zum Bilden eines ringförmigen Sedimentfilmes der Spalt im Boden der Sedimentationskammer ringförmig ausgebildet ist. Bei einem ringförmig geschlossenen Sedimentfilm, welcher eine Kreisform oder auch eine davon abweichende, z.B. eckige Form aufweisen kann, ist ein zuverlässiges Durchströmen des Waschfluides durch den Sedimentfilm sichergestellt.

Dies wird erfindungsgemäß insbesondere dadurch erreicht, daß ein innerer Kanal als Zulaufkanal innerhalb des ringförmigen Sedimentfilms angeordnet ist und daß die Strömungseinrichtung einen ringförmigen äußeren Kanal als Ablaufkanal aufweist, der den ringförmigen Sedimentfilm umgibt und zum Ableiten des den Sedimentfilm durchströmenden Waschfluides ausgebildet ist.

Alternativ hierzu oder in Kombination mit der vorstehend genannten Ausführungsform ist es nach der Erfindung auch möglich, daß ein äußerer Kanal als Zulaufkanal ringförmig ausgebildet ist und den ringförmigen Sedimentfilm umgibt und daß ein innerer Kanal als Ablaufkanal innerhalb des ringförmigen Sedimentfilmes angeordnet und zum Ableiten des den Sedimentfilm durchströmenden Waschfluides ausgebildet ist. Der Ablaufkanal für das Waschfluid leitet dieses üblicherweise entgegen der Gravitationsrichtung nach oben, insbesondere zu einer darüberllegenden, weiteren Sedimentationskammer.

Für eine besonders kompakte Vorrichtung, mit welcher eine besonders gute Stofftrennung zwischen den beiden Komponenten erzielbar ist, ist es nach der Erfindung vorgesehen, daß in einem Behälter mehrere Sedimentationskammern kaskadenartig übereinander angeordnet sind. Mit der Anzahl der Sedimentationskammern in dem Behälter nimmt auch der Grad der erreichbaren Stofftrennung und damit der erzielte Reinheitsgrad einer Stoffkomponente zu.

Bei dieser kaskadenartigen Anordnung mehrerer Sedimentationskammern ist es erfindungsgemäß bevorzugt, daß der Ablaufkanal einer Sedimentationskammer mit dem Zulaufkanal einer darüberliegenden Sedimentationskammer leitungsverbunden ist und daß der Spalt einer Sedimentationskammer unmittelbar oberhalb der darunterliegenden Sedimentationskammer angeordnet ist.

Ein kontinuierlicher und möglichst gleichmäßiger Sedimentfilm wird erfindungsgemäß dadurch erzeugt, daß der Boden der Sedimentationskammer trichterförmig zu dem Spalt hin ausgebildet ist. Durch die Schrägstellung des Bodens gegenüber der Gravitationsrichtung wird auch der Bildung fester Ablagerungen an dem Boden der Sedimentationskammer entgegengewirkt.

Zur Vereinfachung der Herstellung der Vorrichtung ist es nach der Erfindung vorgesehen, daß die Sedimentationskammer rotationssymmetrisch zu einer Mittenachse ausgebildet ist und daß die Sedimentationskammer zumindest zwei ringförmige Wandelemente aufweist, von denen zumindest ein Wandelement konisch zur Mittenachse ausgebildet ist. Die erfindungsgemäße Vorrichtung kann so aus einzelnen Rohr- und Ringsegmenten aufgebaut werden, die in einen einfachen zylindrischen Behälter eingebracht werden. Bei mehreren Sedimentationskammern können diese jeweils aus denselben Elementen aufgebaut sein, so daß eine wirtschaftliche Herstellung der einzelnen Elemente ermöglicht wird.

Eine besonders bevorzugte konstruktive Ausführungsform der erfindungsgemäßen Vorrichtung besteht darin, daß ein Träger vorgesehen ist, welcher parallel und insbesondere koaxial zur Mittenachse angeordnet ist, und daß ein radial innen liegendes Wandelement der Sedimentationskammer an dem Träger befestigt ist. Eine Sedimentationskammer kann so im wesentlichen aus nur zwei ringförmigen Elementen aufgebaut werden, nämlich einem innen liegenden Wandelement und einem außen liegenden Wandelement. Das innen liegende Wandelement wird dabei an dem mittigen Träger befestigt, während das außen liegende Wandelement an der Behälterinnenseite oder an entlang der Behälterinnenseite verlaufenden Stützen befestigt werden kann.

Eine bevorzugte Ausführungsform der Erfindung besteht weiter darin, daß der Träger relativ zu dem Behälter bewegbar gelagert ist. Auf diese Weise kann über den Träger oder den Behälter Bewegungsenergie und insbesondere gewisse Scherkräfte in den Sedimentationskuchen eingebracht werden. Hierdurch wird das gleichmäßige Bilden des Sedimentfilmes unterstützt. Des weiteren werden durch die aufgebrachten Scherkräfte eventuell auftretende Durchströmungs- oder Bypasskanäle durch den Sedimentationskuchen in dem Sedimentationskuchen wieder zugesetzt.

Eine besonders zweckmäßige konstruktive Ausgestaltung der Erfindung wird dadurch erreicht, daß der Träger drehbar gelagert und über einen Motor drehend angetrieben ist.

Des weiteren ist es erfindungsgemäß auch möglich, daß der Träger axial verschiebbar ist. Durch eine axiale Verschiebung des Trägers sowie eine Feststellung in bestimmten axialen Lagen kann die Größe des Spaltes im Boden verändert werden. Somit kann auf einfache Weise die Spaltgröße bei Veränderung des zu behandelnden Stoffes angepaßt werden.

Gemäß einer anderen Ausführungsform der Erfindung ist vorgesehen, daß der Träger hohl ist und mit Durchbrüchen zum Leiten des Waschfluides innerhalb des Trägers ausgebildet ist. Auf diese Weise kann eine einfache Fluidleitung gewährleistet werden, wenn das Waschfluid nach einem radialen Einströmen in einen ringförmigen Sedimentfilm mittig zur nächsten Sedimentationskammer geführt werden soll.

Ein gleichmäßiges Durchströmungsverhalten und damit ein kontinuierlicher Verfahrensablauf wird nach der Erfindung dadurch gewährleistet, daß der Behälter im wesentlichen zylindrisch zu einer Mittenachse ausgebildet ist.

Nach der Erfindung wird ein guter Abzug der sedimentierten Stoffkomponente aus dem Behälter dadurch erreicht, daß ein Bodenbereich des Behälters konisch ausgebildet und mit einer mittigen Ableitung sowie einem ringförmigen Zufluß für das Waschfluid versehen ist. Der Bodenbereich des Behälters kann zweckmäßigerweise auch als Hyperkonzentrator ausgeführt sein, der grundsätzlich bekannt und beispielsweise in der Zeitschrift "Filtrieren und Separieren" 1998, Band 12, Heft 1, Seite 8 bis 15 beschrieben ist.

Die Erfindung ist des weiteren dadurch fortgebildet, daß an einem dem Bodenbereich gegenüberliegenden Ende des Behälters eine Beruhigungszone zum Sammeln des Waschfluides und der getrennten zweiten Stoffkomponente vorgesehen ist und daß eine Zuleitung für noch unbehandelten Stoff zu der oder den Sedimentationskammern unterhalb der Beruhigungszone in den Behälter mündet.

Eine besonders gute Stofftrennung ist erfindungsgemäß dadurch erzielbar, daß mehrere Behälter parallel und/oder in Reihe geschaltet sind. Bei der Reihenschaltung wäre der Abfluß eines Behälters mit dem Zulauf zumindest eines weiteren Behälters verbunden, so daß eine weitere Stofftrennung durchgeführt werden kann, um einen gewünschten Reinheitsgrad zu erreichen. Bei der Parallelschaltung sind die sich entsprechenden Zu- und Abläufe miteinander verbunden, so daß die Durchflußkapazität erhöht wird.

Die Erfindung wird nachfolgend weiter anhand von bevorzugten Ausführungsbeispielen erläutert, welche schematisch in den Zeichnungen dargestellt sind. In den Zeichnungen zeigen:
- Fig. 1: eine schematische Darstellung einer erfindungsgemäßen Vorrichtung in einer ersten Ausführungsform;
- Fig. 2: eine schematische Darstellung einer erfindungsgemäßen Vorrichtung in einer zweiten Ausführungsform;
- Fig. 3: eine schematische Darstellung eines Abschnittes einer erfindungsgemäßen Vorrichtung in einer dritten Ausführungsform; und
- Fig. 4: eine schematische Darstellung einer erfindungsgemäßen Vorrichtung in einer vierten Ausführungsform.

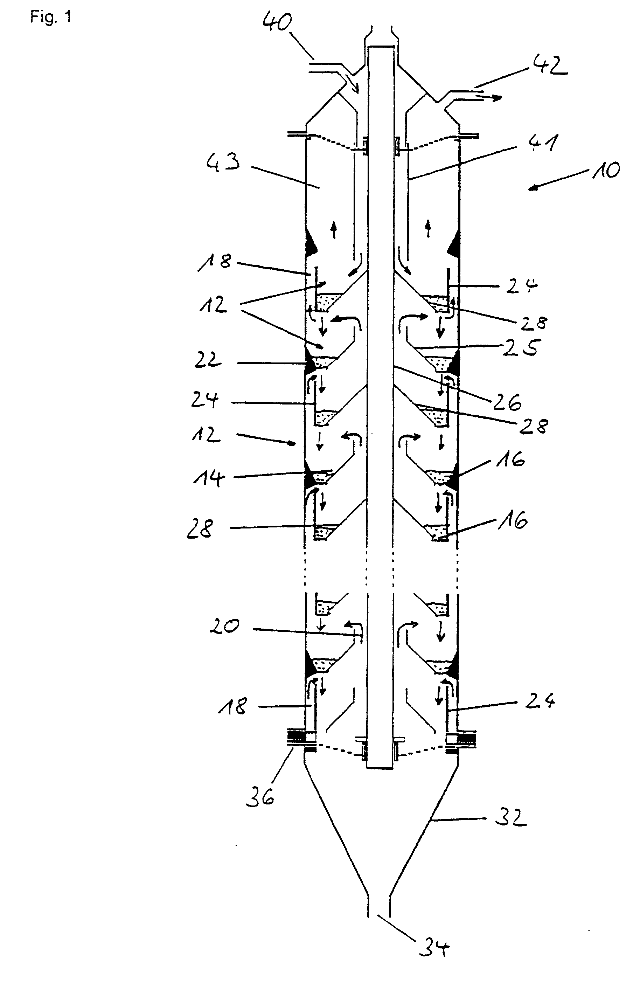

Figur 1 zeigt die schematische Darstellung einer ersten Ausführungsform der vorliegenden Erfindung. Bei der gezeigten Ausführungsform ist die Sedimentationsrichtung gleichgerichtet zur Gravitationsrichtung, wobei sich das schwerere Sediment nach unten absetzt. Bei der Behandlung von Stoffen, bei denen die sedimentbildende Stoffkomponente gegenüber dem Waschfluid leichter ist, verläuft die Sedimentationsrichtung entgegengesetzt zur Gravitationsrichtung. In diesem Fall kann die gezeigte Vorrichtung um 180° verkehrt eingesetzt werden.

Ein länglicher Behälter 10 enthält eine Vielzahl von Sedimentationskammern 12. Der Behälter 10 kann verschiedene Längen aufweisen. In der vorliegenden schematischen Darstellung ist der Behälter 10, wie durch die gestrichelten Linien angezeigt, unvollständig dargestellt. Die einzelnen Sedimentationskammern 12 weisen Böden 14 auf und sind durch ringförmige Wandelemente 22, 24, 25, 28 begrenzt bzw. unterteilt. Wird nun ein zu trennender Stoff mit einer ersten und einer zweiten Stoffkomponente durch eine Öffnung 40 in den Behälter 10 eingeleitet, so tritt dieser nach Durchgang durch ein mittiges Einlaufrohr 41 zunächst in die oberste Sedimentationskammer 12 ein und sedimentiert unter Einfluß eines Gravitationsfeldes. Dabei entsteht eine schwere Phase mit der einen Stoffkomponente, die ein Sediment bildet, und eine leichte Phase, die aus einem Waschfluid und der anderen Stoffkomponente besteht und nach oben strömt. Das Sediment sammelt sich in der trichterförmigen Sedimentationskammer 12 und strömt durch eine als Spalt ausgebildete, ringförmige Öffnung 16 in dem Boden 14. Der jeweiligen Sedimentationskammer 12 ist durch ringförmige Wandelemente 24, 28 bzw. 22, 25 gebildet und seitlich begrenzt. Die spaltförmige Öffnung 16 bewirkt die Ausbildung eines relativ dünnen Sedimentfilmes, welcher sich in Richtung der Gravitationskraft ausbreitet. Der Sedimentfilm strömt anschließend in die nächste Sedimentationskammer 12, so daß der Vorgang des Bildens eines Sedimentfilms sequentiell wiederholbar ist.

An der Unterseite des Behälters 10 ist ein ringförmiger Zufluß 36 für ein Waschfluid vorgesehen. Das Waschfluid wird von unten nach oben durch den Behälter 10 geleitet, so daß sich eine Gegenströmung in bezug auf den zu trennenden Stoff ausbildet. Durch eine geeignete Strömungseinrichtung wird erreicht, daß das Waschfluid den an den Böden 14 durch die Öffnungen 16 abgeleiteten Sedimentfilm quer anströmt, wobei der Sedimentfilm durchströmt wird und dabei zumindest teilweise eine Verdrängung der zweiten Stoffkomponente aus dem Sedimentfilm erfolgt. Das Strömungsverhalten ist durch Pfeile veranschaulicht.

In dem Behälter 10 ist zentral ein Träger 26 axial verschiebbar und drehbar gelagert, der von oben durch einen nicht dargestellten Motor antreibbar ist. An dem Träger sind radial innenliegende Wandelemente 25, 28 angebracht. Diese Wandelemente 25, 28 beeinflussen zusammen mit weiteren an dem Behälter 10 angeordneten Wandelementen 22, 24 das Strömungsverhalten der durch den Behälter 10 geleiteten Substanzen. Insbesondere bildet ein zylindrisches radial außenliegendes Wandelement 24 zusammen mit dem Behälter 10 einen äußeren Kanal 18 für das Waschfluid, während ein innerer Kanal 20 der angrenzenden Sedimentationskammern 12 durch ein radial innenliegendes Wandelement 25 und den rohrförmigen Träger 26 gebildet ist. Die kolonnenartig angeordneten Sedimentationskammern 12 weisen abwechselnd den äußeren Kanal 18 und den inneren Kanal 20 auf, so daß ein im Querschnitt mäanderförmiges Strömen des Waschfluides erzeugt wird. Um in den Sedimentationskammern 12 ein Fördern des Sedimentes zu den Öffnungen 16 zu unterstützen, weisen die Wandelemente 22, 25, 28 konisch ausgebildete Bereiche auf.

Das durch einen äußeren Kanal 18 geleitete Waschfluid strömt von außen radial nach innen und trifft quer auf einen Sedimentfilm, der im wesentlichen parallel zur Mittenachse aus der ringförmigen Öffnung 16 eines Bodens 14 ausströmt. Der Sedimentfilm wird im wesentlichen durchströmt, wobei mindestens eine Stoffkomponente zumindest teilweise verdrängt wird. Nachfolgend strömt das Waschfluid im wesentlichen entlang der Unterseite des Bodens 14 durch den inneren Kanal 20 zu den darüberliegenden Sedimentationskammern 12. Nach dem Austritt aus dem inneren Kanal 20 stellt sich wiederum eine Querströmung ein, durch welche der ringförmige Sedimentfilm der darüberliegenden Sedimentationskammer 12 nunmehr von innen radial nach außen durchströmt wird. Nach Durchtritt durch den obersten, äußeren Kanal 18 strömt das Waschfluid mit der ausgewaschenen Stoffkomponente in eine Beruhigungszone 43 ein, in welcher ein abschließender Sedimentationsvorgang stattfinden kann. Aus dieser Beruhigungszone 43 wird das Waschfluid mit der zumindest einen angereicherten Stoffkomponente über eine Austrittsöffnung 42 abgeleitet.

Der untere Bereich 32 des Behälters 10 ist konisch ausgebildet. Zur Entnahme der im unteren Bereich eingetroffenen Stoffkomponente ist eine Öffnung 34 in dem kegelartigen Behälterabschnitt 32 vorgesehen.

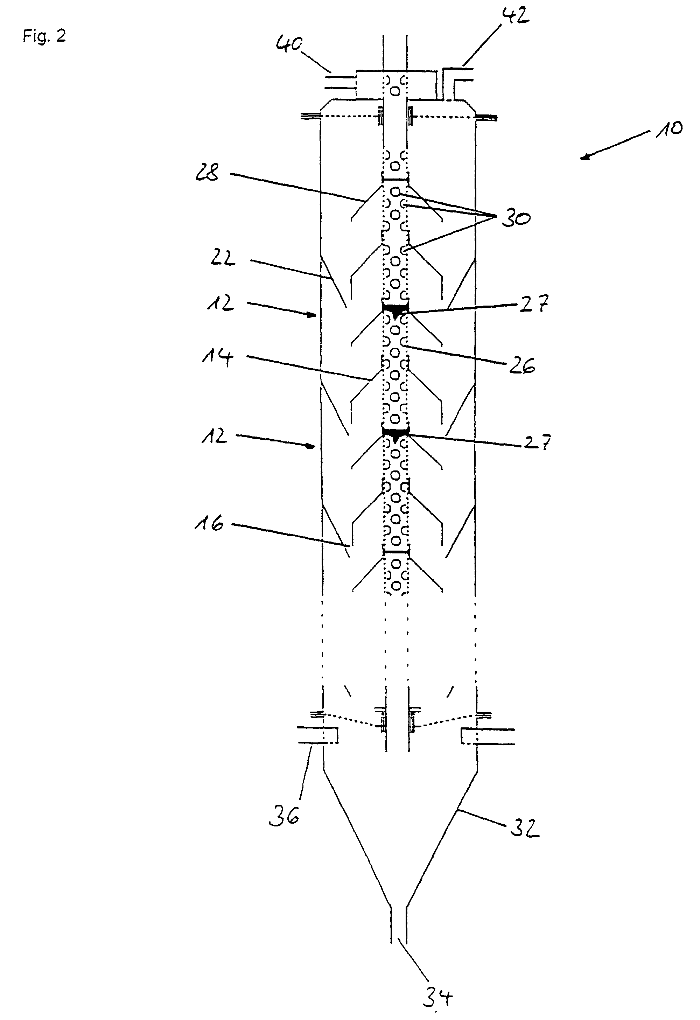

In Fig. 2 ist eine weitere Ausführungsform der vorliegenden Erfindung dargestellt. Als Besonderheit ist zu erwähnen, daß der zu trennende Stoff, nachdem er in die Öffnung 40 eingetreten ist, durch das hohle Innere des parallel zur Mittenachse des Behälters 10 ausgebildeten Trägers 26 transportiert wird. Damit der Träger 26 als ein innerer Kanal zur Waschfluidleitung dienen kann, ist der Träger 26 mit Öffnungen 30 und Barrieren 27 als Strömungssperren versehen, so daß das Fluid gezielt zu den Sedimentationskammern 12 gelangen kann. Dort findet dann wiederum die erfindungsgemäße Verdrängung von mindestens einer Stoffkomponente aus einem sich bildenden Sedimentfilm statt, wobei wiederum das Waschfluid für die Verdrängung verantwortlich ist. Der Sedimentfilm bildet sich auch hier an einer Öffnung 16, wobei diese zwischen dem Boden 14 und einem konisch verlaufenden Wandelement 22 ausgebildet ist.

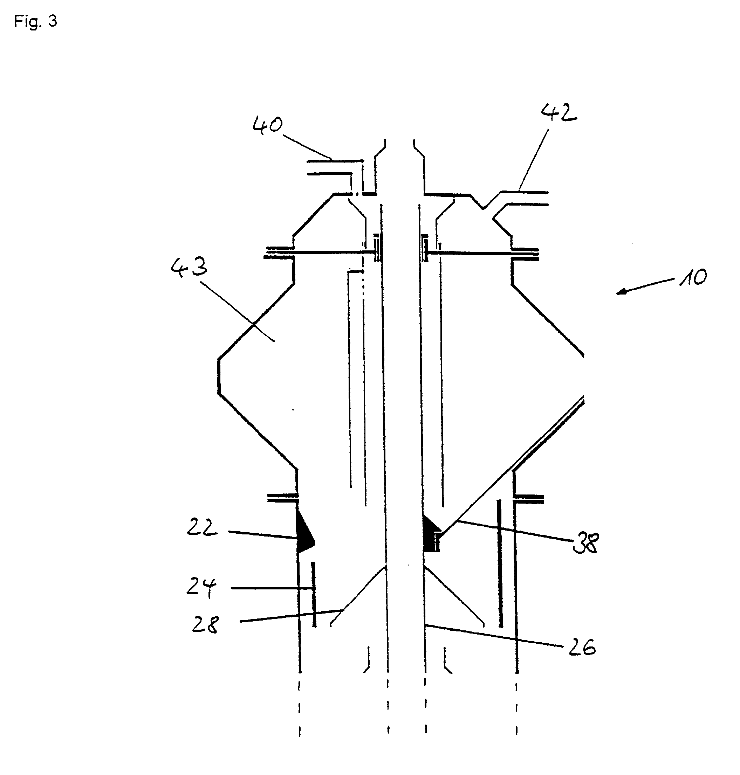

Figur 3 zeigt einen Teil einer weiteren speziellen Ausführungsform der vorliegenden Erfindung mit dem Zulauf 40 für den zu trennenden Stoff und dem Ablauf 42 für das Waschfluid. Eine Besonderheit dieser Ausführungsform besteht in dem größeren Durchmesser der Beruhigungszone 43, wodurch eine abschließende Sedimentation verbessert wird. Durch einen Rührer 38 werden Scherkräfte eingebracht, welche die Bildung fester Ablagerungen in der Beruhigungszone 43 verhindern. Mittels des Rührers 38 wird eine Förderwirkung zur Behältermitte hin erzeugt. Die Abfolge von Sedimentationskammern 12 kann beispielsweise den Ausführungsbeispielen in Fig. 1 oder Fig. 2 entsprechen, wobei allerdings auch andere, das erfindungsgemäße Prinzip verwirklichende Ausführungsformen denkbar sind.

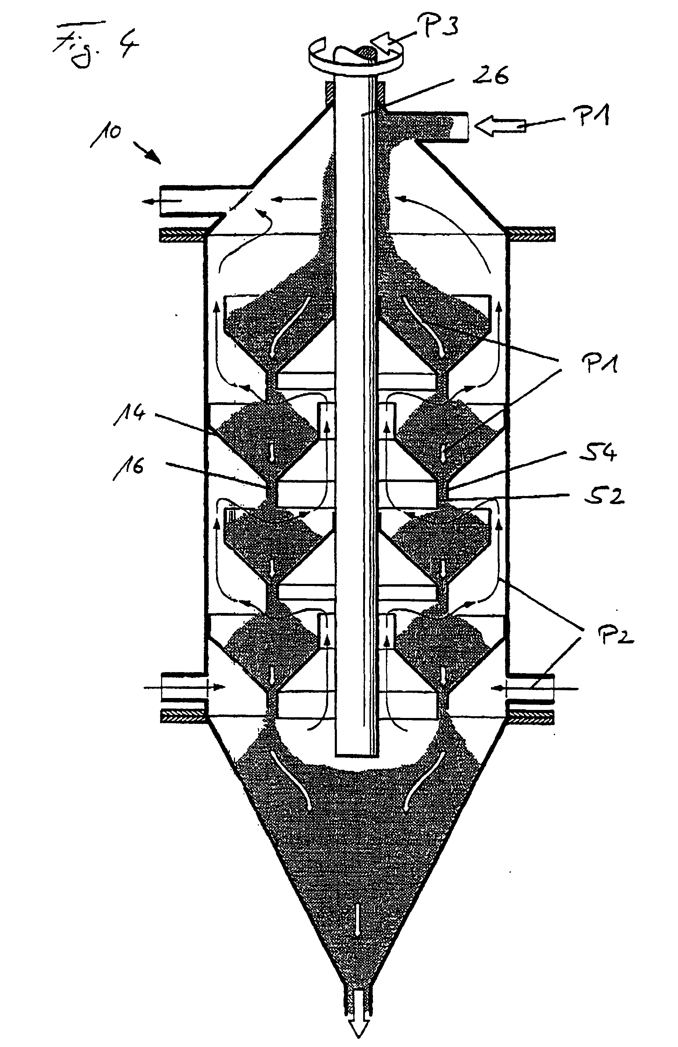

In Fig. 4 ist eine vierte Ausführungsform einer erfindungsgemäßen Vorrichtung gezeigt, deren grundsätzlicher Aufbau und dessen Funktionsweise im wesentlichen den vorausgehend beschriebenen Ausführungsformen entspricht. Im nachfolgenden wird daher nur auf einzelne konstruktive Unterschiede eingegangen.

An einer Oberseite eines Behälters 10 wird ein zu trennender Stoff mit einer sedimentbildenden Stoffkomponente eingeleitet. Der Verlauf der Stoffkomponente ist durch die weißen Pfeile P1 veranschaulicht, während die Einleitung und der Strömungsverlauf eines im Gegenstrom hierzu geführten Waschfluides durch die Pfeile P2 gekennzeichnet sind.

Um einen besonders stabilen Sedimentfilm an einer spaltförmigen Öffnung 16 an dem Boden 14 jeder einzelnen Sedimentationskammer zu bilden, ist die spaltförmige Öffnung von zwei vertikal verlaufenden, ringförmigen Begrenzungswänden 52, 54 umgeben. Eine erste Begrenzungsform 52 ist dabei in vertikaler Richtung länger ausgebildet als eine zweite Begrenzungswand 54. Bei der vorliegenden Ausführungsform ist die erste Begrenzungswand 52 in Strömungsrichtung des Waschfluides gemäß Pfeil P2 abgewandt angeordnet, damit so ein unerwünschtes Abreißen des Sedimentfilmes unmittelbar nach der Öffnung 16 verhindert wird.

Bei der vorliegenden Ausführungsform ist die Zuführung des abzutrennenden Stoffes so gesteuert, dass bei Austritt der sedimentierten ersten Stoffkomponente aus einer Sedimentationskammer der Sedimentfilm im Querschnitt etwa konusförmig in das gebildete Sediment der nachfolgenden Sedimentationskammer übergeht. Auch bei diesem sich konusförmig verbreiternden Sedimentationsfilm ist es wesentlich, dass eine ausreichende Durchströmung des relativ breiten Sedimentfilmes durch das Waschfluid gewährleistet ist. Diese Ausführungsform ist insbesondere im Rahmen der Kunststofferzeugung einsetzbar, beispielsweise bei der Abtrennung von PPS oder PE von einem zugehörigen Lösungsmittel.

Für einen guten Materialfluß durch die einzelnen Sedimentationskammern sind die einzelnen Böden 14 zu beiden Seiten des jeweiligen Spaltes 16 mit einer Neigung versehen. Zusätzlich wird ein mittiger Träger 26 und die daran befestigten ringförmigen Wände der einzelnen Sedimentationskammern gemäß Pfeil P3 in Rotation versetzt. Durch dieses zusätzliche Einbringen einer gewissen Bewegungsenergie können unerwünschte Durchströmungskanäle innerhalb der Sedimentbereiche schnell und zuverlässig zugesetzt werden.

## Patentansprüche

1. Verfahren zur Stofftrennung, bei dem
- ein Stoff, welcher zumindest eine erste Stoffkomponente und eine zweite Stoffkomponente umfaßt, sowie ein Waschfluid in einen Behälter (10) mit mindestens einer Sedimentationskammer (12) eingeleitet und einem Gravitationsfeld ausgesetzt werden,
- unter Einfluß des Gravitationsfeldes in der Sedimentationskammer (12) die erste Stoffkomponente in einer Sedimentationszone angereichert wird, welche durch einen Boden (14) begrenzt ist, und
- der Stoff mit der angereicherten ersten Stoffkomponente aus der Sedimentationszone über eine Öffnung (16) in dem Boden (14) abgeleitet wird,
**dadurch gekennzeichnet,**
- **daß** der Stoff mit der angereicherten ersten Stoffkomponente durch die Öffnung (16) in dem Boden (14) kontinuierlich als ein Sedimentfilm abgeleitet wird, und
- **daß** das Waschfluid den Sedimentfilm **quer anströmt** und durchströmt und dabei eine zumindest teilweise Verdrängung der verbliebenen zweiten Stoffkomponente aus dem Sedimentfilm erfolgt.

2. Verfahren nach Anspruch 1,
**dadurch gekennzeichnet,**
**daß** der Sedimentfilm mit der angereicherten ersten Stoffkomponente nach dem Durchströmen des Waschfluides in zumindest eine weitere Sedimentationskammer(12) eingeleitet wird, in welcher der Vorgang des Anreicherns der ersten Stoffkomponente, das Bilden eines Sedimentfilmes sowie das Anströmen des Sedimentfilmes mittels des Waschfluides wiederholt werden.

3. Verfahren nach Anspruch 2,
**dadurch gekennzeichnet,**
**daß** der Vorgang des Anreicherns der ersten Stoffkomponente sowie des Anströmens des Sedimentfilmes in einer Vielzahl von Schritten wiederholt wird, bis ein vorgegebener Restanteil der zweiten Stoffkomponente erreicht ist.

4. Verfahren nach einem der Ansprüche 1 bis 3,
**dadurch gekennzeichnet,**
**daß** als Waschfluid ein Fluid mit einem spezifischen Gewicht verwendet wird, welches sich von dem der ersten Stoffkomponente unterscheidet.

5. Verfahren nach einem der Ansprüche 1 bis 4,
**dadurch gekennzeichnet,**
**daß** bei kaskadenartig übereinander angeordneten Sedimentationskammern (12) der zu trennende Stoff an einer in Sedimentationsrichtung vorangehenden oberen Sedimentationskammer (12) und das Waschfluid an einer in Sedimentationsrichtung nachfolgenden unteren Sedimentationskammer (12) in den Behälter eingeleitet werden und
**daß** das Waschfluid nach einem Durchströmen des Sedimentfilmes an der unteren Sedimentationskammer (12) anschließend entgegen der Sedimentationsrichtung zu dem Sedimentfilm der darüberliegenden Sedimentationskammer (12) strömt.

6. Verfahren nach einem der Ansprüche 1 bis 5,
**dadurch gekennzeichnet,**
**daß** der Stoff mit der angereicherten ersten Stoffkomponente an einem Ende des Behälters (10) abgeleitet wird und daß das Waschfluid mit der zweiten Stoffkomponente an einem gegenüberliegenden Ende des Behälters (10) abgeleitet wird.

7. Verfahren nach einem der Ansprüche 1 bis 6,
**dadurch gekennzeichnet,**
**daß** der mit der ersten Stoffkomponente angereicherte Stoff durch eine ringförmige Öffnung (16) in dem Boden (14) strömt und dabei ein ringförmig geschlossener Sedimentfilm gebildet wird und
**daß** das Waschfluid den ringförmig geschlossenen Sedimentfilm von außen nach innen oder von innen nach außen durchströmt.

8. Verfahren nach einem der Ansprüche 1 bis 7,
**dadurch gekennzeichnet,**
**daß** mittels eines Bewegungsorgans in den Behälter (10) gezielt Bewegungsenergie, insbesondere in den Bereich der Sedimentationszone eingebracht wird.

9. Verfahren nach einem der Ansprüche 1 bis 8,
**dadurch gekennzeichnet,**
**daß** eine Sedimentationsrichtung, in welcher der Sedimentfilm strömt, zu einer Gravitationsrichtung des Gravitationsfeldes gleichgerichtet oder entgegengesetzt verläuft.

10. Vorrichtung zur Stofftrennung, insbesondere zur Durchführung des Verfahrens nach einem der Ansprüche 1 bis 9, mit einem Behälter (10), der zum Aufnehmen und Sedimentieren eines Stoffes mindestens eine Sedimentationskammer (12) umfaßt, die an einem Ende durch einen Boden (14) begrenzt ist, der eine Öffnung (16) zum Ableiten eines sedimentierten Stoffes aufweist, wobei in dem Behälter (10) eine Strömungseinrichtung zum Zuführen eines Waschfluides vorgesehen ist,
**dadurch gekennzeichnet,**
- **daß** die Öffnung (16) in dem Boden (14) der Sedimentationskammer (12) als ein Spalt ausgebildet ist, durch welchen beim Ableiten des sedimentierten Stoffes ein kontinuierlicher Sedimentfilm erzeugbar ist, und
- **daß** die Strömungseinrichtung zumindest einen Kanal (18, 20) umfaßt, der in einem Bereich eines Austrittes des Sedimentfilmes aus dem Spalt angeordnet und zum **quer Anströmen und Durchströmen** des Sedimentfilmes durch das Waschfluid ausgebildet ist.

11. Vorrichtung nach Anspruch 10,
**dadurch gekennzeichnet,**
**daß** zum Bilden eines ringförmigen Sedimentfilmes der Spalt in dem Boden (14) der Sedimentationskammer (12) ringförmig ausgebildet ist.

12. Vorrichtung nach Anspruch 11,
**dadurch gekennzeichnet,**
**daß** ein innerer Kanal (20) als Zulaufkanal innerhalb des ringförmigen Sedimentfilmes angeordnet ist und
**daß** die Strömungseinrichtung einen ringförmigen äußeren Kanal (18) als Ablaufkanal aufweist, der den ringförmigen Sedimentfilm umgibt und zum Ableiten des den Sedimentfilm durchströmenden Waschfluides ausgebildet ist.

13. Vorrichtung nach Anspruch 11 oder 12,
**dadurch gekennzeichnet,**
**daß** ein äußerer Kanal (18) als Zulaufkanal ringförmig ausgebildet ist und den ringförmigen Sedimentfilm umgibt und
**daß** ein innerer Kanal (20) als Ablaufkanal innerhalb des ringförmigen Sedimentfilmes angeordnet und zum Ableiten des den Sedimentfilm durchströmenden Waschfluides ausgebildet ist.

14. Vorrichtung nach einem der Ansprüche 10 bis 13,
**dadurch gekennzeichnet,**
**daß** in einem Behälter (10) mehrere Sedimentationskammern (12) kaskadenartig übereinander angeordnet sind.

15. Vorrichtung nach Anspruch 14,
**dadurch gekennzeichnet,**
**daß** der Ablaufkanal einer Sedimentationskammer (12) leitungsverbunden ist mit dem Zulaufkanal einer in Sedimentationsrichtung vorangehenden Sedimentationskammer (12) und
**daß** der Spalt (16) einer Sedimentationskammer (12) in Sedimentationsrichtung unmittelbar über der nachfolgenden Sedimentationskammer (12) angeordnet ist.

16. Vorrichtung nach einem der Ansprüche 10 bis 15,
**dadurch gekennzeichnet,**
**daß** der Boden (14) der Sedimentationskammer (12) trichterförmig zu dem Spalt (16) hin ausgebildet ist.

17. Vorrichtung nach einem der Ansprüche 10 bis 16,
**dadurch gekennzeichnet,**
**daß** die Sedimentationskammer (12) rotationssymmetrisch zu einer Mittenachse ausgebildet ist und
**daß** die Sedimentationskammer (12) zumindest zwei ringförmige Wandelemente (22, 25; 24, 28) aufweist, von denen zumindest ein Wandelement (22; 25, 28) konisch zur Mittenachse ausgebildet ist.

18. Vorrichtung nach Anspruch 17,
**dadurch gekennzeichnet,**
**daß** ein Träger (26) vorgesehen ist, welcher parallel und insbesondere koaxial zur Mittenachse angeordnet ist, und
**daß** zumindest ein radial innen liegendes Wandelement (25; 28) der Sedimentationskammer (12) an dem Träger (26) befestigt ist.

19. Vorrichtung nach Anspruch 18,
**dadurch gekennzeichnet,**
**daß** der Träger (26) relativ zu dem Behälter (10) bewegbar gelagert ist.

20. Vorrichtung nach Anspruch 19,
**dadurch gekennzeichnet,**
**daß** der Träger (26) drehbar gelagert und über einen Motor drehend angetrieben ist.

21. Vorrichtung nach einem der Ansprüche 18 bis 20,
**dadurch gekennzeichnet,**
**daß** der Träger (26) axial verschiebbar ist.

22. Vorrichtung nach einem der Ansprüche 18 bis 21,
**dadurch gekennzeichnet,**
**daß** der Träger (26) hohl ist und mit Durchbrüchen (30) zum Leiten des Waschfluides innerhalb des Trägers (26) ausgebildet ist.

23. Vorrichtung nach einem der Ansprüche 10 bis 22,
**dadurch gekennzeichnet,**
**daß** der Behälter (10) im wesentlichen zylindrisch zu einer Mittenachse ausgebildet ist.

24. Vorrichtung nach einem der Ansprüche 10 bis 23,
**dadurch gekennzeichnet,**
**daß** ein Bodenbereich (32) des Behälters (10) konisch ausgebildet und mit einer mittigen Ableitung (34) sowie einem ringförmigen Zufluß (36) für das Waschfluid versehen ist.

25. Vorrichtung nach Anspruch 24,
**dadurch gekennzeichnet,**
**daß** an einem dem Bodenbereich (32) gegenüberliegenden Ende des Behälters (10) eine Beruhigungszone (43) zum Sammeln des Waschfluides und der getrennten zweiten Stoffkomponente vorgesehen ist und
**daß** eine Zuleitung (40) für noch unbehandelten Stoff zu der oder den Sedimentationskammern (12) unterhalb der Beruhigungszone in den Behälter (10) mündet.

26. Vorrichtung nach einem der Ansprüche 10 bis 25,
**dadurch gekennzeichnet,**
**daß** mehrere Behälter (10) parallel und/oder in Reihe geschaltet sind.

27. Vorrichtung nach einem der Ansprüche 10 bis 26,
**dadurch gekennzeichnet,**
**daß** der Spalt zwischen zwei Begrenzungswänden (52, 54) ausgebildet ist, von denen eine erste Begrenzungswand (52) länger ist als die zweite Begrenzungswand (54).

## Claims

1. Method of material separation, in which
- a material, which comprises at least a first material component and a second material component, is introduced, together with a washing fluid, into a container (10) with at least one sedimentation chamber (12) and is subjected to a gravitational field,
- under influence of the gravitational field in the sedimentation chamber (12), the first material component is enriched in a sedimentation zone, which is bounded by a base (14), and
- the material with the enriched first material component is evacuated from the sedimentation zone via an opening (16) in the base (14),
**characterized in that**
- the material with the enriched first material component is continuously evacuated as a sediment film through the opening (16) in the base (14) and
- the washing fluid transversely flows onto and through the sediment film and, in the process, an at least partial displacement of the remaining second material component takes place from the sediment film.

2. Method according to Claim 1, **characterized in that**, after the washing fluid has flowed through it, the sediment film with the enriched first material component is introduced into at least one further sedimentation chamber (12) in which the process of enriching the first material component, the formation of a sediment film and the flow of the washing fluid onto the sediment film are repeated.

3. Method according to Claim 2, **characterized in that** the process of enriching the first material component and the flow onto the sediment film is repeated in a plurality of steps until a specified residual proportion of the second material component is attained.

4. Method according to one of Claims 1 to 3, **characterized in that** a fluid with a specific weight which differs from that of the first material component is used as the washing fluid.

5. Method according to one of Claims 1 to 4, **characterized in that**, in the case of sedimentation chambers (12) arranged in cascade one above the other, the material to be separated is introduced into the container at an upper sedimentation chamber (12), upstream in the sedimentation direction, and the washing fluid is introduced into the container at a lower sedimentation chamber (12), downstream in the sedimentation direction, and **in that**, after flowing through the sediment film at the lower sedimentation chamber (12), the washing fluid subsequently flows against the sedimentation direction to the sediment film of the sedimentation chamber (12) above.

6. Method according to one of Claims 1 to 5, **characterized in that** the material with the enriched first material component is evacuated at one end of the container (10) and **in that** the washing fluid is evacuated with the second material component at an opposite end of the container (10).

7. Method according to one of Claims 1 to 6, **characterized in that** the material enriched with the first material component flows through an annular opening (16) in the base (14) and, in the process, an annular closed sediment film is formed, and **in that** the washing fluid flows through the annular closed sediment film from the outside to the inside or from the inside to the outside.

8. Method according to one of Claims 1 to 7, **characterized in that** kinetic energy is specifically introduced by means of a motive element in the container (10), in particular in the region of the sedimentation zone.

9. Method according to one of Claims 1 to 8, **characterized in that** a sedimentation direction, in which the sediment film flows, extends in the same direction or opposite to a gravitational direction of the gravitational field.

10. Appliance for material separation, in particular for carrying out the method according to one of Claims 1 to 9, having a container (10), which comprises at least one sedimentation chamber (12) for accepting and sedimenting a material, which is bounded at one end by a base (14) which has an opening (16) for evacuating a sedimented material, a flow device for supplying a washing fluid being provided in the container (10), **characterized in that**
- the opening (16) in the base (14) of the sedimentation chamber (12) is configured as a gap by means of which a continuous sediment film can be generated during the evacuation of the sedimented material, and
- the flow device comprises at least one duct (18, 20), which is arranged in a region of the outlet of the sediment film from the gap and is configured for the transverse approach flow and through-flow of the washing fluid through the sediment film.

11. Appliance according to Claim 10, **characterized in that** the gap in the base (14) of the sedimentation chamber (12) has an annular configuration in order to form an annular sediment film.

12. Appliance according to Claim 11, **characterized in that** an inner duct (20) is arranged as feed duct within the annular sediment film and **in that** the flow device has an annular outer duct (18) as evacuation duct, which surrounds the annular sediment film and is configured for evacuating the washing fluid which flows through the sediment film.

13. Appliance according to Claim 11 or 12, **characterized in that** an outer duct (18) is configured as an annular feed duct and surrounds the annular sediment film, and **in that** an inner duct (20) is arranged as evacuation duct within the annular sediment film and is configured for evacuating the washing fluid which flows through the sediment film.

14. Appliance according to one of Claims 10 to 13, **characterized in that** a plurality of sedimentation chambers (12) are arranged in cascade one above the other in a container (10).

15. Appliance according to Claim 14, **characterized in that** the evacuation duct of a sedimentation chamber (12) has a conduit connection to the feed duct of a sedimentation chamber (12) upstream in the sedimentation direction, and **in that** the gap (16) of a sedimentation chamber (12) is arranged immediately above the downstream sedimentation chamber (12) in the sedimentation direction.

16. Appliance according to one of Claims 10 to 15, **characterized in that** the base (14) of the sedimentation chamber (12) is configured as a funnel shape toward the gap (16).

17. Appliance according to one of Claims 10 to 16, **characterized in that** the sedimentation chamber (12) has a rotationally symmetrical configuration relative to a centre line, and **in that** the sedimentation chamber (12) has at least two annular wall elements (22, 25; 24, 28), of which at least one wall element (22; 25, 28) is configured conically relative to the centre line.

18. Appliance according to Claim 17, **characterized in that** a stand (26) is provided which is arranged parallel to and, in particular, coaxial with the centre line, and **in that** at least one radially inwardly located wall element (25; 28) of the sedimentation chamber (12) is fastened to the stand (26).

19. Appliance according to Claim 18, **characterized in that** the stand (26) is supported so that it can be moved relative to the container (10).

20. Appliance according to Claim 19, **characterized in that** the stand (26) is rotatably supported and is rotationally driven by a motor.

21. Appliance according to one of Claims 18 to 20, **characterized in that** the stand (26) can be displaced axially.

22. Appliance according to one of Claims 18 to 21, **characterized in that** the stand (26) is hollow and is configured with penetrations (30) for guiding the washing fluid within the stand (26).

23. Appliance according to one of Claims 10 to 22, **characterized in that** the container (10) has an essentially cylindrical configuration relative to a centre line.

24. Appliance according to one of Claims 10 to 23, **characterized in that** a base region (32) of the container (10) has a conical configuration and is provided with a central drain (34) and an annular feed (36) for the washing fluid.

25. Appliance according to Claim 24, **characterized in that** a settling zone (43) is provided for collecting the washing fluid and the separated second material component at an end of the container (10) opposite to the base region (32), and **in that** an inlet (40), for as yet untreated material, opens into the sedimentation chamber or chambers (12) below the settling zone in the container (10).

26. Appliance according to one of Claims 10 to 25, **characterized in that** a plurality of containers (10) are connected in parallel and/or in series.

27. Appliance according to one of Claims 10 to 26, **characterized in that** the gap is configured between two boundary walls (52, 54), of which a first boundary wall (52) is longer than the second boundary wall (54).

## Revendications

1. Procédé pour séparer des matériaux, dans lequel
- un matériau, qui comprend au moins un premier composant du matériau et un deuxième composant du matériau, ainsi qu'un fluide de lavage sont introduits dans un récipient (10) avec au moins une chambre de sédimentation (12) et sont soumis à un champ de gravitation,
- le premier composant du matériau est enrichi, sous l'influence du champ de gravitation dans la chambre de sédimentation (12), dans une zone de sédimentation qui est délimitée par un fond (14), et
- le matériau avec le premier composant du matériau enrichi est évacué hors de la zone de sédimentation par une ouverture (16) dans le fond (14),
**caractérisé en ce que**
- le matériau avec le premier composant du matériau enrichi est évacué en continu sous la forme d'un film de sédiment par l'ouverture (16) dans le fond (14), et **en ce que**
- le fluide de lavage aborde et traverse transversalement le film de sédiment et **en ce qu'**il se produit en l'occurrence un déplacement au moins partiel du deuxième composant du matériau résiduel hors du film de sédiment.

2. Procédé suivant la revendication 1, **caractérisé en ce que** le film de sédiment avec le premier composant du matériau enrichi est introduit, après le passage du fluide de lavage, dans au moins une autre chambre de sédimentation (12), dans laquelle l'opération d'enrichissement du premier composant du matériau, la formation d'un film de sédiment ainsi que l'abordage du film de sédiment au moyen du fluide de lavage sont répétés.

3. Procédé suivant la revendication 2, **caractérisé en ce que** l'opération d'enrichissement du premier composant du matériau ainsi que l'opération d'abordage du film de sédiment sont répétées en une pluralité d'étapes, jusqu'à ce qu'une fraction résiduelle prédéterminée du deuxième composant du matériau soit atteinte.

4. Procédé suivant l'une quelconque des revendications 1 à 3, **caractérisé en ce que** l'on utilise comme fluide de lavage un fluide avec un poids spécifique, qui est différent de celui du premier composant du matériau.

5. Procédé suivant l'une quelconque des revendications 1 à 4, **caractérisé en ce que**, avec des chambres de sédimentation (12) disposées en cascade l'une au-dessus de l'autre, le matériau à séparer est introduit dans le récipient par une chambre de sédimentation (12) supérieure qui précède dans le sens de la sédimentation et le fluide de lavage par une chambre de sédimentation (12) inférieure qui suit dans le sens de la sédimentation, et **en ce qu'**après avoir traversé le film de sédiment dans la chambre de sédimentation (12) inférieure, le fluide de lavage circule ensuite dans le sens contraire au sens de la sédimentation vers le film de sédiment de la chambre de sédimentation (12) située au-dessus de celle-ci.

6. Procédé suivant l'une quelconque des revendications 1 à 5, **caractérisé en ce que** le matériau avec le premier composant du matériau enrichi est évacué à une extrémité du récipient (10) et **en ce que** le fluide de lavage avec le deuxième composant du matériau est évacué à une extrémité opposée du récipient (10).

7. Procédé suivant l'une quelconque des revendications 1 à 6, **caractérisé en ce que** le matériau avec le premier composant du matériau enrichi circule à travers une ouverture annulaire (16) dans le fond (14) et il se forme en l'occurrence un film de sédiment fermé en anneau et **en ce que** le fluide de lavage traverse le film de sédiment fermé en anneau de l'extérieu vers l'intérieur ou de l'intérieur vers l'extérieur.

8. Procédé suivant l'une quelconque des revendications 1 à 7, **caractérisé en ce que** l'on introduit de l'énergie cinétique de façon appropriée dans le récipient (10) au moyen d'un organe mobile, en particulier dans la région de la zone de sédimentation.

9. Procédé suivant l'une quelconque des revendications 1 à 8, **caractérisé en ce qu'**un sens de la sédimentation, dans lequel le film de sédiment circule, est orienté dans le même sens ou dans le sens opposé par rapport à un sens de la gravitation du champ de gravitation.

10. Dispositif pour séparer des matériaux, en particulier pour la mise en oeuvre du procédé suivant l'une quelconque des revendications 1 à 9, avec un récipient (10) qui, pour la réception et la sédimentation d'un matériau, comprend au moins une chambre de sédimentation (12), qui est délimitée à une extrémité par un fond (14), qui présente une ouverture (16) pour l'évacuation d'un matériau sédimenté, un dispositif d'écoulement étant prévu dans le récipient (10) en vue de l'introduction d'un fluide de lavage,
**caractérisé en ce que**
- l'ouverture (16) dans le fond (14) de la chambre de sédimentation (12) a la forme d'une fente, à travers laquelle on peut produire un film de sédiment continu lors de l'évacuation du matériau sédimenté, et **en ce que**
- le dispositif d'écoulement comprend au moins un canal (18, 20), qui est disposé dans une région d'une sortie du film de sédiment hors de la fente et qui est configuré en vue de faire aborder et traverser transversalement le film de sédiment par le fluide de lavage.

11. Dispositif suivant la revendication 10, **caractérisé en ce que** la fente dans le fond (14) de la chambre de sédimentation (12) est de forme annulaire en vue de former un film de sédiment annulaire.

12. Dispositif suivant la revendication 11, **caractérisé en ce qu'**un canal intérieur (20) est disposé au titre de canal d'admission à l'intérieur du film de sédiment annulaire et **en ce que** le dispositif d'écoulement présente un canal extérieur annulaire (18) au titre de canal d'échappement, qui entoure le film de sédiment annulaire et qui est configuré en vue de l'évacuation du fluide de lavage traversant le film de sédiment.

13. Dispositif suivant la revendication 11 ou 12, **caractérisé en ce qu'**un canal extérieur (18) est configuré en anneau au titre de canal d'admission et entoure le film de sédiment annulaire, et **en ce qu'**un canal intérieur (20) est disposé à l'intérieur du film de sédiment annulaire au titre de canal d'échappement et est configuré en vue de l'évacuation du fluide de lavage traversant le film de sédiment.

14. Dispositif suivant l'une quelconque des revendications 10 à 13, **caractérisé en ce que** plusieurs chambres de sédimentation (12) sont disposées en cascade l'une au-dessus de l'autre dans un récipient (10).

15. Dispositif suivant la revendication 14, **caractérisé en ce que** le canal d'échappement d'une chambre de sédimentation (12) est en liaison d'écoulement avec le canal d'admission d'une chambre de sédimentation (12) précédente dans le sens de la sédimentation, et **en ce que** la fente (16) d'une chambre de sédimentation (12) est disposée, dans le sens de la sédimentation, immédiatement au-dessus de la chambre de sédimentation (12) suivante.

16. Dispositif suivant l'une quelconque des revendications 10 à 15, **caractérisé en ce que** le fond (14) de la chambre de sédimentation (12) est configuré en forme de trémie vers la fente (16).

17. Dispositif suivant l'une quelconque des revendications 10 à 16, **caractérisé en ce que** la chambre de sédimentation (12) est symétrique de révolution par rapport à un axe central et **en ce que** la chambre de sédimentation (12) présente au moins deux éléments de paroi annulaires (22, 25 ; 24, 28), dont au moins un élément de paroi (22 ; 25, 28) est de forme conique par rapport à l'axe central.

18. Dispositif suivant la revendication 17, **caractérisé en ce qu'**il est prévu un support (26), qui est disposé parallèlement et en particulier coaxialement à l'axe central, et **en ce qu'**au moins un élément de paroi (25 ; 28) de la chambre de sédimentation (12) situé radialement à l'intérieur est fixé au support (26).

19. Dispositif suivant la revendication 18, **caractérisé en ce que** le support (26) est mobile par rapport au récipient (10).

20. Dispositif suivant la revendication 19, **caractérisé en ce que** le support (26) est rotatif et est entraîné en rotation par un moteur.

21. Dispositif suivant l'une quelconque des revendications 18 à 20, **caractérisé en ce que** le support (26) est mobile en direction axiale.

22. Dispositif suivant l'une quelconque des revendications 18 à 21, **caractérisé en ce que** le support (26) est creux et est doté de passages (30) en vue de guider le fluide de lavage à l'intérieur du support (26).

23. Dispositif suivant l'une quelconque des revendications 10 à 22, **caractérisé en ce que** le récipient (10) est de forme sensiblement cylindrique par rapport à un axe central.

24. Dispositif suivant l'une quelconque des revendications 10 à 23, **caractérisé en ce qu'**une région du fond (32) du récipient (10) est de forme conique et est pourvue d'une évacuation centrale (34) ainsi que d'une admission annulaire (36) pour le fluide de lavage.

25. Dispositif suivant la revendication 24, **caractérisé en ce qu'**il est prévu, à une extrémité du récipient (10) située à l'opposé de la région de fond (32), une zone de stabilisation (43) destinée à récolter le fluide de lavage et le deuxième composant du matériau séparé et **en ce qu'**une conduite d'admission (40) pour le matériau non encore traité vers la ou les chambre(s) de sédimentation (12) débouche dans le récipient (10) en dessous de la zone de stabilisation.

26. Dispositif suivant l'une quelconque des revendications 10 à 25, **caractérisé en ce que** plusieurs récipients (10) sont montés en parallèle et/ou en série.

27. Dispositif suivant l'une quelconque des revendications 10 à 26, **caractérisé en ce que** la fente est formée entre deux parois de limitation (52, 54), dont une première paroi de limitation (52) est plus longue que la seconde paroi de limitation (54).
